# EUROPEAN PATENT SPECIFICATION

(11) **EP 3 293 523 B1**
(45) Date of publication and mention of the grant of the patent: **07.10.2020**
(21) Application number: 16894311.6
(22) Date of filing: 14.03.2016
(51) Int. Cl.: G01N 35/02, B01L 3/14, G01N 1/00, B01L 3/00, G01N 35/00

(54) **SAMPLE CONTAINER AND AUTOMATIC SAMPLE CONTAINER PROCESSING SYSTEM**
PROBENBEHÄLTER UND AUTOMATISCHES VERARBEITUNGSSYSTEM FÜR PROBENBEHÄLTER
RÉCIPIENT D'ÉCHANTILLON ET SYSTÈME DE TRAITEMENT AUTOMATIQUE DE RÉCIPIENT D'ÉCHANTILLON

(43) Date of publication of application: 14.03.2018
(73) Proprietor: Kobe Bio Robotix Co. Ltd., Katou-shi, Hyogo 673-1336 (JP)
(72) Inventor: UEYAMA Yukio, Kobe-shi Hyogo 651-1103 (JP)
(74) Representative: Horn Kleimann Waitzhofer Patentanwälte PartG mbB
(86) International application number: PCT/JP2016/057991
(87) International publication number: WO 2017/158687

(56) References cited:
- WO-A1-2009/113694
- WO-A1-2015/108807
- JP-A- H0 910 605
- JP-A- H0 910 605
- JP-A- S60 177 245
- JP-A- 2003 285 841
- JP-A- 2007 192 738
- JP-A- 2007 192 738
- JP-A- 2014 059 288
- US-A- 4 684 250
- US-A1- 2002 106 309
- US-A1- 2011 181 875
- US-A1- 2015 273 468

## Description

### Technical Field

This invention relates to a sample storage tube for storing and holding various samples. For example, the sample storage tube is used in holding and storing medicine samples being developed. Also, it is used for storing, refrigerating, freezing and preserving samples that hold gene information of DNA in the medical field. As such a sample storage tube becomes small, it is called a micro tube.

### Background Art

In the research and development of medicine and chemicals, sample storage tubes are used extensively in storing a large number of samples. For example, scientists prepare a large number of samples for a comparative experiment with slightly changing conditions such as blending amount, and they use storage tubes for storing the samples for a required period of time while evaluating them.

In order to control and store a large number of storage tubes at one time as described above, there are two types of the sample storage systems known in the prior art. The first type is a well-plate block type of sample storage container. The second type is a micro tube array type arraying a lot of sample storage containers of the micro tube type in the storage rack.

The micro tube array stores and contains each test sample in each small sample container, called the micro tube, piece by piece independently and arrayed in the storage rack. The micro tube is a container of about several centimeter height and made of plastic material. Each micro tube is an independent piece, and it is possible to use them as sample storage containers one by one. It is also possible to use as the micro tube array storing a lot of test samples at the same time by arraying a lot of micro tubes in the storage rack.

The micro tube comprises a tube body, which has an opening at the top, for storing the sample; and a lid for enclosing the opening of the tube body.

As the micro tubes are independent of each other and a large number of storage tubes are arrayed in a storage rack at the same time, it is necessary to identify each storage tube independently. In recent years sample storage tubes that are controlled by printing a barcode or two-dimensional code on the side and/or bottom surface of the storage tube are highlighted, in which various data and/or control information of a sample are encoded, and then the barcode or two-dimensional code is read in a control process.

In recent years IC chips that can be applied to the wireless communication device such as RFID become compact in size. The technology reads and writes the management information of the stored sample by IC chip stuck onto the surface of the micro tube or embedded into the sample storage tube.

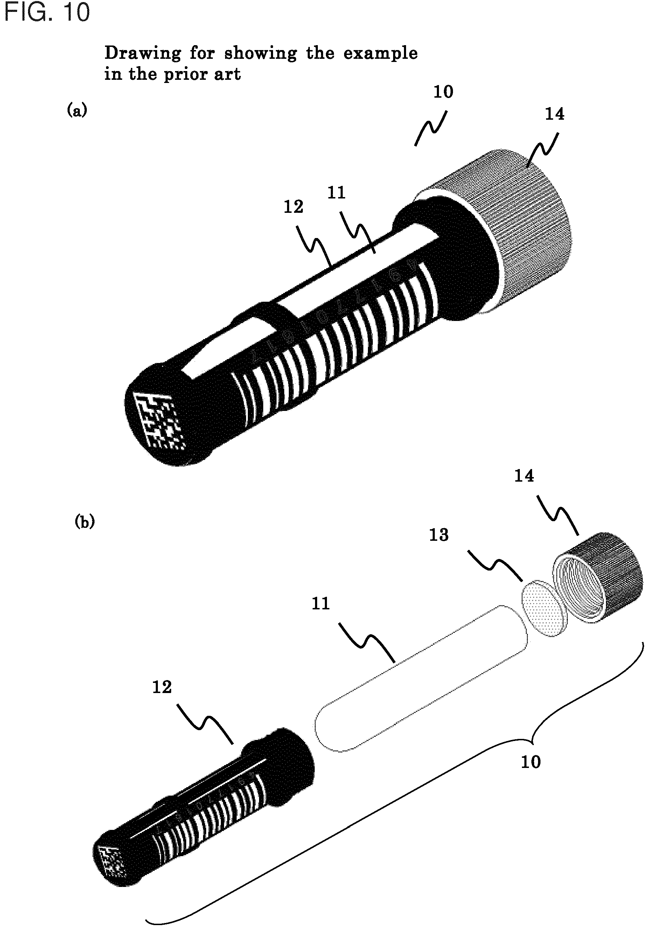

Fig.10 is a schematic view showing the conventional micro tube type sample storage tube on which the conventional code information is printed (JP Tokkai 2001-158450). Fig.10 (a) shows a perspective view, Fig.10 (b) shows an exploded view for showing the configuration.

In this configuration, the sample storage tube 10 comprises a transparent tube body 11; an outer element 12 installed to the outer surface of the tube body 11, a gasket 13 contacting the opening of the tube body 11 and a lid 14 for capping the opening of the tube body. The lid 14 is screwed with the outer element 12, and the gasket 13 seals the opening of the tube body 11 pressed by the inner surface of the lid 14.

In this example, the outer element 12 is made of black base plastic resin that can turn its color from black to white by laser irradiation. Bar code is printed onto the side surface and the two-dimension dot code is printed onto the bottom surface of the outer element 12. Bar code and two-dimension code in which the management information for identifying the sample stored in the micro tube 10 are printed onto the side surface and the bottom surface of the outer element 12 after storing the sample into the micro tube 10.

In recent years, an operation using the micro tube is enhanced by an automatic apparatus for capping the lid (capper) and decapping the lid (decapper) such as a robot arm. An operation using the micro tube is enhanced by an automatic apparatus for conveying from a predetermined position in the racks to another predetermined position. During the micro tube automated operation, each micro tube is identified by reading the coded information from the side surface and the bottom surface of the outer element 12.

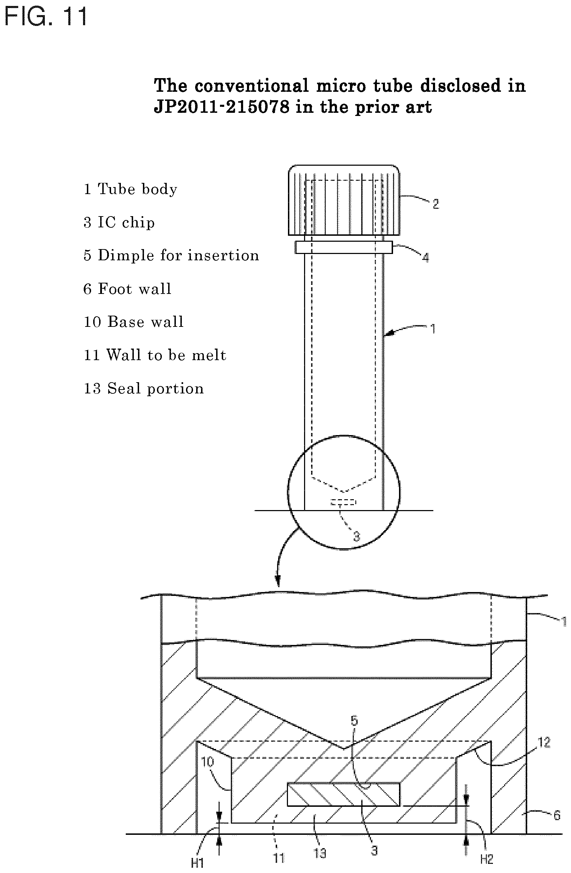

Fig.11 is a schematic view showing the example of the conventional micro tube in which the wireless communication IC chip such as RFID is installed (JP Tokkai 2011-215078). The upper drawing shows the side view of the whole micro tube, the lower drawing shows the enlarged view of the part of the bottom surface. Some of the inner structures are drawn by dotted lines to understand the inner structure easily.

An IC chip 3 is embedded in the bottom of the tube body 1. The IC chip is surrounded by the base wall 10 and the IC chip is sealed by the seal part 13. The IC chip 3 can be accessed for writing and reading data through wireless radio wave having a specific wavelength in a non-contact manner.
Prior art 1: JP Tokkai 2001-158450
Prior art 2: JP Tokkai 2011-215078

US 2015/273468 A1 describes a sample storage that includes a frame and an array of sample container holding areas disposed within the frame where a spacing between adjacent sample container holding areas is independent of a gripping area for sample containers held by the sample storage.

US 2011/181875 A1 describes a sample storage, in which barcodes and two-dimensional codes printed on the outer surface of the sample storage can be read correctly without false recognition.

US 4 684 250 A describes a set of cuvettes, wherein the measurement windows are in the bottom of the cuvettes and surrounded by a matt-faced area. The matt-faced area eliminates the access of diffused light to the detector of the photometer.

JP H09 10605 describes a test tube supporting rack having a rack body provided with a recessed part for supporting the test tube in its central part and a cap member which has a prescribed cap member penetrating hole and is disposed on the aperture side of the rack body.

WO 2015/108807 A1 describes a container that includes a tubular sidewall defining interior and exterior surfaces of the container, and including first and second regions disposed relative to one another along a major axis of the tubular sidewall. An identification mark is embedded within the tubular sidewall at sectors about the tubular sidewall within the first region.

JP 2007 192738 A describes a reaction vessel that is constituted so that a plurality of storage parts opened on an upper surface of a substrate, capable of storing a reagent are provided integrally, and by forming the plurality of storage parts from mutually different resin materials.

### Disclosure of the invention

### The problems to be solved

Miniaturization of micro tube is progressing. By using a small micro tube, a large number of micro tubes can be stored in a rack, so that the internal space of the expensive refrigerator apparatus or the freezer apparatus can be used effectively. Analysis techniques for the samples are improved. The amount of the sample to be stored in the inside of the apparatus also becomes small, and as a result the micro tube can be miniaturized. Therefore, information such as numerals characters observable by the human eye cannot be printed on the surface. All information should be coded and printed by the printed information code or should be written in the wireless IC chip.

A variety of automatic operations with respect to the micro tubes are also developed. The micro tubes are handled by a variety of automatic machines such as the automation apparatus for capping the lid (capper), the automation apparatus for removing of the lid (decapper), the automation apparatus for picking the micro tubes up from the rack, the automation apparatus for conveying the micro tubes, the automation apparatus for storing into the rack and the automation apparatus for applying to a sample analyzer. Each operation requires the identification of each micro tubes accessed by the automation apparatus. Therefore, the read/write processing mechanism for the information carried by each micro tube should be unified among the automation apparatus. If the printed information code printed onto the micro tube is shown as Fig.10, the read/write processing mechanism using laser beam for the printed information code should be unified. If the micro tube includes a wireless IC chip shown as Fig.11, the read/write processing mechanism using wireless radio wave should be unified.

However, there are a large number of systems in the market, and some suppliers mainly employ the reading/writing processing mechanism for the printed information code by using the laser beam, while other suppliers mainly employ the reading/writing processing mechanism for the IC chip using wireless radio wave. Therefore a user cannot apply the apparatus freely from the point of view of cost effectiveness.

For this purpose, there is a demand for the sample storage tube providing both the printed information codes and the wireless IC chip on the bottom surface of the micro tube.

However, there is a problem that both the printed information codes and the wireless IC chip cannot be simply provided on the bottom surface of the micro tube.

A first problem is a problem of heat generation during writing the printed information codes by laser beam. When printing the printed information codes, a coloring agent included to a plastic resin turns its color by heat generated by laser beam. Therefore, it is necessary to arrange the wireless IC chip separately from the printed information code.

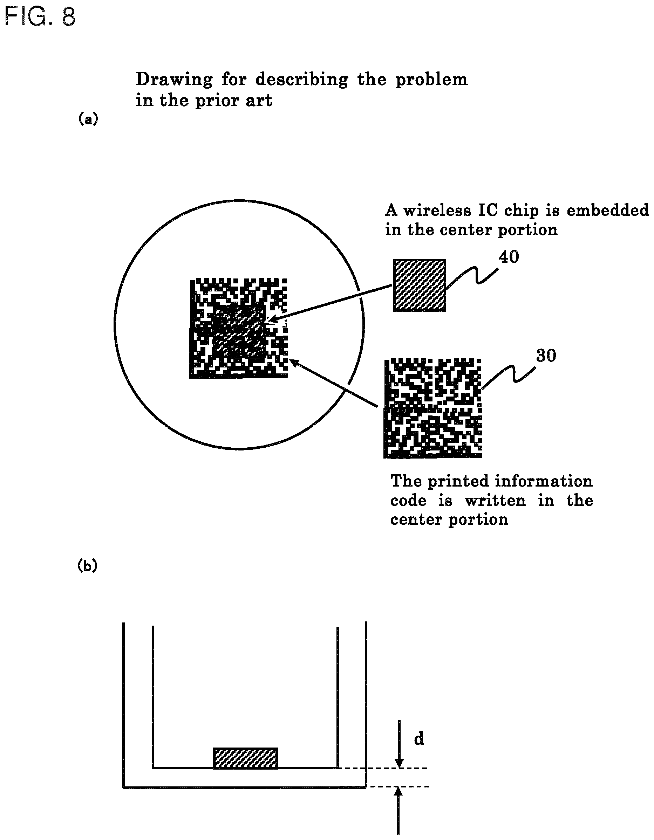

FIG. 8 is a schematic view showing an example of an arrangement in the case where a printed information code and a wireless IC chip are overlapped with each other at the center portion.

As shown in Fig.8, the printed information code 30 such as one-dimensional code and two-dimensional code is printed and the wireless IC chip 40 is embedded under the surface of the bottom of the micro tube 20. The thickness of the plastic resin between the printed information code 30 and the wireless IC chip 40 is "d". As the micro tube is miniaturized, the restriction in the height direction becomes strict, and a sufficient thickness "d" cannot be secured so the thickness "d" cannot help being thin.

As shown in Fig.8 (b), in order to develop coloring agent contained in a plastic resin material, when laser beam is irradiated on the surface of the bottom of the micro tube, heat is generated locally for color development. Since the thickness "d" to the wireless IC chip embedded in the bottom is small, heat generated by the laser beam is transmitted to the wireless IC chip. The wireless IC chip is weak in heat resistance and heat generated by the laser beam can cause damage and the reliability of the wireless IC chip can be deteriorated.

Therefore, the wireless IC chip must be spaced apart from the printed information codes. There is a limitation such that the printed information codes and the wireless IC chip cannot be arranged in a superimposed manner at the center.

The second problem is that the arrangement of both the wireless IC chip and the printed information code must be arranged in the center according to a conventional technology to ensure data read/write accuracy and data reliability and to confirm the position of the micro tube in the rack. The position of the micro tube cannot be confirmed precisely if the wireless IC chip and the printed information code are not located in the center of the bottom of the micro tube. This requirement is not compatible with the requirement of the first problem described above.

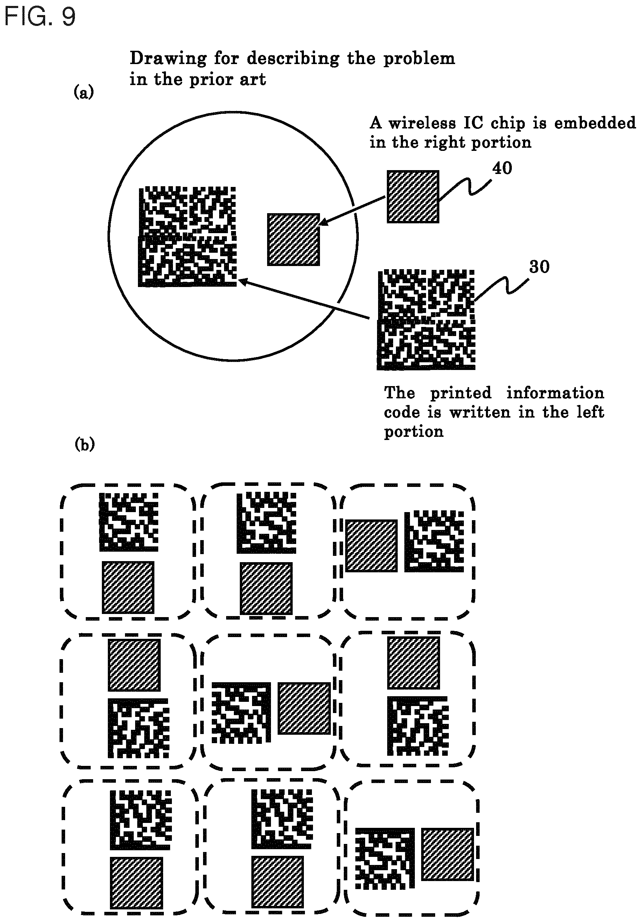

Fig.9 is a schematic view showing a configuration that a printed information code and a wireless IC chip are arranged and shifted from the center position each other so as not to overlap each other.

In the example shown in FIG.9, the micro tube 20 has a printed information code 30 such as a one-dimensional code and a two-dimensional code arranged on the one side of the surface of the bottom, and the wireless IC chips 40 is arranged on the other side of the surface of the bottom.

FIG.9 (b) is a schematic view showing an appearance seen from the bottom surface. A portion of the rack is shown and plural micro tubes 20 are arranged in a matrix. As shown in Fig.9 (b), the contained state of micro tubes 20 varies in the rotation angle in the circumferential direction with respect to the central axis. There is no practical way that the rotation angles in the circumferential direction with respect to the central axis are aligned in the same direction.

In the recognition processing of a printed information code 30, each position of the printed information code 30 is recognized. However, as shown in Fig.9 (b), the interval between adjacent printed information codes varies widely. It is difficult to clip each printed information code 30 separately by the image processing and there is a possibility that an error may occur in the clipping processing.

The wireless IC chip 40 has the same problem. If the position of the micro tube is recognized by the wireless IC chip 40, the interval between adjacent wireless IC chips 40 varies widely, and it becomes difficult to recognize the position by using the wireless IC chip 40.

The third problem is a limitation of the surface state for the wireless IC chip.

Some wireless IC chips require the condition of being attached to the surface of the object or being covered by the light transmissive material covering the surface of the object even if the wireless IC chip is embedded in the object. These wireless IC chips employ dual methods of data input/output in which image processing and wireless radio wave are combined. In order to specify the position of the wireless IC chip, it is necessary to read a mark on the surface of the wireless IC chip and to specify the position of the wireless IC chip. In order to specify a position of the wireless IC chip by image processing, the wireless IC chip should be embedded in the center of the bottom surface of the micro tube from the restriction described in the second problem. A region where the wireless IC chip is embedded should be formed by the light transmissive material, so that the printed information code cannot be provided. On the other hand, the printed information code should be printed in the center of the bottom surface of the micro tube from the restriction described in the second problem, but the printed information code cannot be provided there because the center portion should be formed by the light transmissive material.

In this way, while the micro tube is miniaturized, it is not practical to use the conventional technology for printing an one-dimensional code or a two-dimensional code and embedding the wireless IC chip in the center position of the bottom surface of the micro tube at the same time.

It is an object of the present invention in view of the above problems to provide a sample storage tube and an automatic operating system for a sample storage tube in which the two-dimensional code can be printed and the wireless IC chip can be embedded in the bottom surface of the sample storage tube, the interference between the two-dimensional code and the wireless IC chip is small, and the data reading and writing accuracy and the data reliability are secured even if the micro tube is miniaturized.

### Means for solving the problems

In order to achieve the above-mentioned object, a sample storage tube for storing a sample in a tube body with the features of claim 1 is provided.

According to the above-mentioned configuration, if the printed information code is selected as a small size which can write in the information writable area, a plurality of the printed information codes are distributed and can be printed in the peripheral portion of the bottom of the tube body. The capacity of the information carried in a printed information code depends on the size of the printed information code. The present invention can employ the printed information code which cannot carry enough information data amount for the information to be applied to a sample storage tube. The present invention can employ such printed information code which can carry insufficient data amount by printing a group of the printed information codes to the information writable area if the information to be carried in a sample storage tube can calculate by combining respective code information carried by each printed information code. If the calculated result from a group of the code information carried by a group of the printed information code by applying a predetermined algorithm equals to the information to be carried in a sample storage tube, such small size printed information code can carry a larger data amount by employing plural small size printed information codes.

For example, two-dimension dot code encoded by general specification can be employed as the printed information code, and the information to be carried in a sample storage tube is encoded to a combination of the independent small size printed information codes. In this manner, a group of small size printed information codes which small size printed information code can carry small data amount is prepared and printed on the dispersed information writable areas.

All small size printed information code in a combination can be the same type of the two-dimension dot code or the different type of the two-dimension dot code.

When a group of the small size printed information codes distributed are printed in the information writable area of each sample storage tube and plural sample storage tubes are arrayed in a rack and an image is taken from the lower direction of the rack, it is necessary for obtaining the correct information data to identify which combination of the sample storage tubes in the image is the correct combination of the sample storage tubes. For identifying the correct combination of the sample storage tubes, it is preferable that at least one of the printed check information codes is added appropriately to each group of the combination of the printed information codes and printed in the information writable area. The correct information data applied to the sample storage can be obtained by identifying the correct group of the printed information codes in the captured image and calculating the encoded information from the identified group of the printed information code by applying a predetermined algorithm.

There are various shapes to be employed as the bottom shape of the micro tube. There are various types of the two-dimension code such as QR code and Data matrix to be employed as the printed information code.

The first pattern is that the bottom shape of the micro tube is circle and the printed information code is two-dimension code encoded by general specification.

In this first pattern, plural general two-dimension codes are printed in the information writable area radially from the center of the bottom.

The second pattern is that the bottom shape of the micro tube is square and the information writable areas are arranged in each corner, and the printed information code is two-dimension code encoded by general specification.

In this second pattern, plural general two-dimension codes are printed in the information writable area arranged in each corner of the bottom.

A various functions can be equipped to the information non-writable area in the center of the sample storage tube.

For example, data input output function via a wireless IC chips can be equipped by embedding the wireless IC chips in the information non-writable area or attaching the wireless IC chip to the surface of the information non-writable area.

According to the above-mentioned configuration, both printed information code and wireless IC chips can be arrayed in the bottom surface of the sample storage tube without interfering with the installation positon of the wireless IC chip and the print position of the printed information code. In addition to the printed information code, the wireless IC chip can carry the information, and respective information carried by the printed information code and carried by the wireless IC chip can be used in combination.

For example, observation function for the sample stored in the sample storage tube through the information non-writable area can be enabled.

The inner sample state can be observed by light irradiated from a light irradiation apparatus to the light detection apparatus wherein the light irradiation apparatus is provided on either the upper side of the lid body or below the bottom surface and a light detecting apparatus is provided on the other side, if the light transmissive material is employed as the material for the information non-writable area in the bottom and for the lid portion corresponding to the information non-writable area.

There are several methods for manufacturing the information non-writable area as transmissive area and the information writable area as coloring area.

The first method is that the information non-writable area and the information writable area are molded by two-color molding apparatus, and at least the information non-writable area is formed by the light transmissive material and the information writable area is formed by the coloring material containing the color developer for printing the printed information codes onto the information writable area.

The second method is that the whole sample tube body is molded with the light transmissive material by a molding apparatus, and at least the information writable area is coated or printed with the coloring material containing the color developer for printing the printed information codes.

Either method can ensure that the light transmissive characteristic for the information non-writable area and the coloring characteristic by laser beam for the information writable area.

Next, an automatic sample storage tube operating system for reading and decoding the encoded information carried in the sample storage tube of the above-mentioned invention comprises an imaging part for taking a picture image of the sample storage tube from the bottom direction; an image recognition part for reading the printed information codes included in the picture image obtained by the imaging part; a grouping part for grouping the printed information codes by using the check result as a hint for searching the printed information codes belonging to the same group obtained by the image recognition part; coded information calculating part for calculating the coded information given to the sample storage tube by combining information carried in plurality of the printed information codes belonging to the same group grouped by grouping part; and a wireless communication for reading the information carried in the IC chip.

### Effect of the invention

According to the sample storage tube of the present invention, the information data to be applied to the sample storage tube can be encoded into the combination of a group of the small size printed information code, without using the larger size printed information code that can carry the information data. The large amount of the information can be encoded and printed in the information writable area by securing the information writable area in the circumference area of the bottom surface and securing the information non-writable area in the center portion area of the bottom surface. The printed information code printed in the information writable in the circumference area does not interfere with the information non-writable area in the center portion area.

As an applicable example, if a wireless IC chip is embedded in the information non-writable area, the printed information codes can be arrayed and printed in the information writable area without interfering with each other. The access method for reading the information carried in the sample storage tube is that the information carried in the printed information codes are read by decoding the code from the captured image, the information carried in the wireless IC chip are read by wireless communication.

If the information non-writable area is formed by the light transmissive material, the sample stored in the sample storage tube can be observed through the information non-writable area as an window.

An automatic sample storage tube operating system can perform correct grouping from plural printed information codes in the captured image captured from the lower direction to the bottom of the sample storage tubes arrayed in a rack, and information carried by the combination of the printed information codes can be calculated from the combination of each encoded information to each printed information code by the predetermined algorithm. In addition, the information carried by the wireless IC chip is read by wireless communication.

### Brief description of the drawings

Fig.1 is a schematic view of the structure of the sample storage tube 100 of the first pattern.
Fig.2 is an enlarged schematic view showing the enlarged image of the information non-writable area 124, information writable area 125, the printed information codes 130 and the wireless IC chip 140 of the first pattern.
Fig. 3 is a schematic view showing the captured image captured from the lower direction to the bottom of the sample storage tube wherein plural sample storage tubes arrayed in a rack.
Fig.4 is a schematic view of the structure of the sample storage tube 100a of the second pattern.
Fig. 5 is a schematic view showing the captured image captured from the lower direction to the bottom of the sample storage tube wherein plural sample storage tubes arrayed in a rack.
Fig. 6 is a bottom view of the bottom 123 of the tube body 120 formed by the two-color injection molding.
Fig.7 is a schematic view of the structure of the sample storage tube 100c of the Embodiment 3.
FIG. 8 is a schematic view showing an example of an arrangement in the case where a printed information code and a wireless IC chip are overlapped with each other at the center portion.
Fig.9 is a schematic view showing a configuration that a printed information code and a wireless IC chip are arranged and shifted from the center position each other so as not to overlap each other.
Fig.10 is a schematic view showing the conventional micro tube type sample storage tube having the conventional code information is printed (JP Tokkai 2001-158450).
Fig.11 is a schematic view showing the example of the conventional micro tube in which the wireless communication IC chip such as RFID installed (JP Tokkai 2011-215078).

### Detailed description of the preferred embodiment

Some embodiments of a sample storage tube and an automatic sample storage tube operating system according to the present invention are described below with reference to the relevant drawing. Needless to add, the claims of the present invention include but are not limited to the application, configuration, or quantity shown in the following embodiments.

As shown below, Embodiment 1, 2, 3 and 4 are explained in this order. Embodiment 1 shows the structure of the sample storage tube 100 of the first pattern. The sample storage tube 100 of the first pattern has the configuration in which the bottom shape of the micro tube is circular and the printed information code is two-dimension code encoded by general specification. The wireless IC chip is embedded in the information non-writable area.

Embodiment 2 shows the structure of the sample storage tube 100a of the second pattern. The sample storage tube 100a of the second pattern has the configuration that the bottom shape of the micro tube is polygon (for example, square) and the information writable areas are arranged in each corner, and the printed information code is two-dimension code encoded by general specification. The wireless IC chip is embedded in the information non-writable area. In addition, other bottom shape designs are shown.

Embodiment 3 shows the structure of the sample storage tube allows observing of the sample stored in the sample storage tube through the information non-writable area without a wireless IC chip.

### Embodiment 1

The sample storage tube 100 in embodiment 1 according to the present invention is described.

Embodiment 1 shows the structure of the sample storage tube 100 of the first pattern. The sample storage tube 100 of the first pattern has the configuration in which the bottom shape of the micro tube is circular and the printed information code is two-dimension code encoded by general specification. The wireless IC chip is embedded in the information non-writable area. In this example the sample storage tube is formed by the two-color injection molding. However, the manufacturing method is not limited to the two-color injection molding.

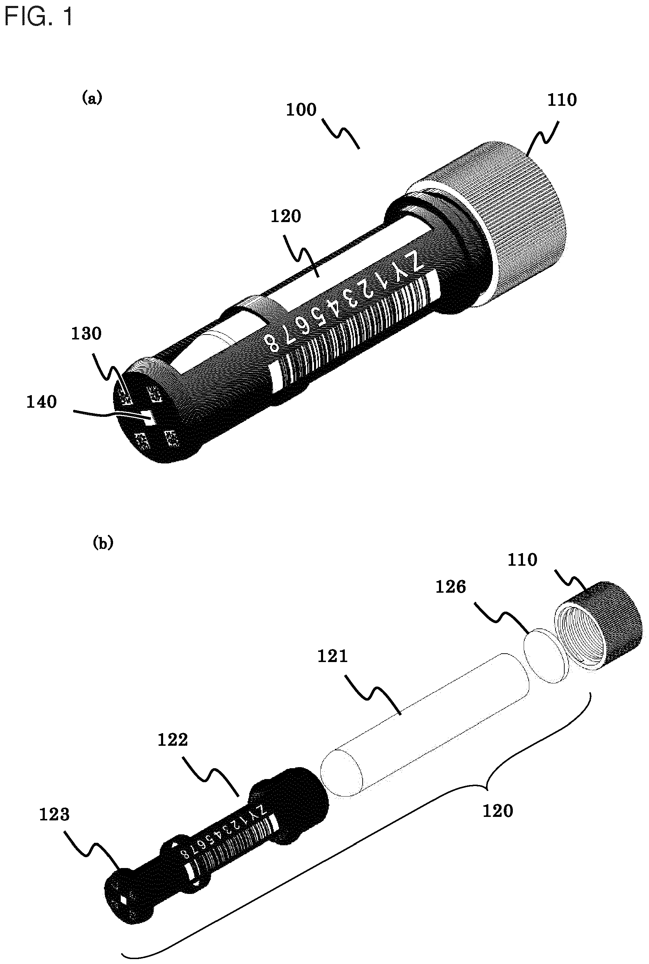

Fig.1 is a schematic view of the structure of the sample storage tube 100. This example employs an outer screw type, but an inner screw type can be employed instead. Fig.1 mainly shows the bottom of the sample storage tube 100 because the bottom structure is important.

Fig.1(a) is a perspective view emphasizing the bottom structure.

Fig.1(b) is an exploded view.

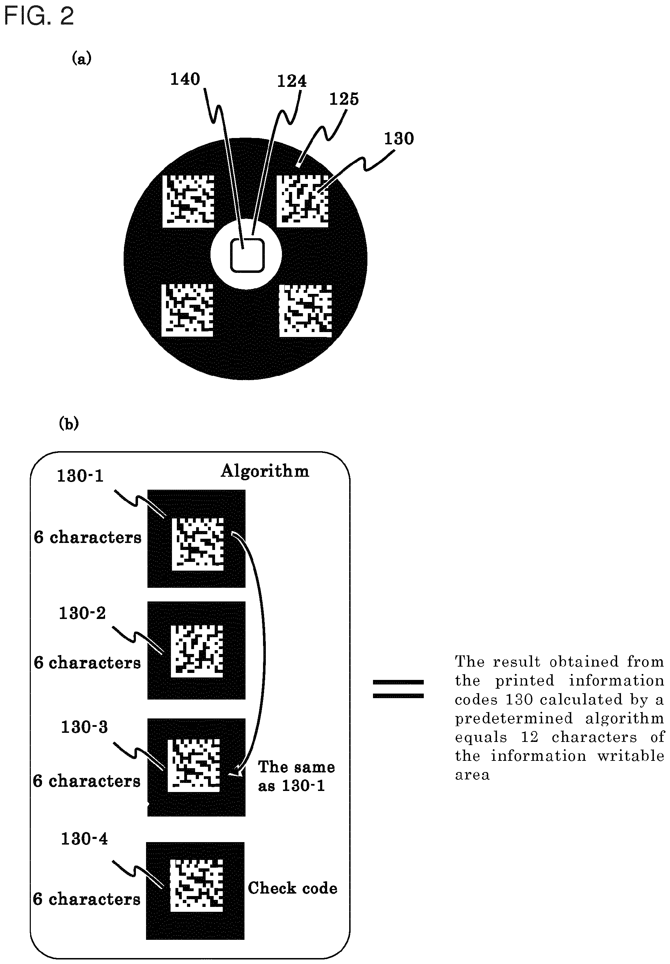

Fig.2 is an enlarged schematic view showing the enlarged image of the information non-writable area 124, information writable area 125, the printed information codes 130 and the wireless IC chip 140 of the first pattern.

The sample storage tube 100 comprises a lid 110, a tube body 120, a printed information code 130 and a wireless IC chip 140.

The lid 110 has a lid structure for capping the upper opening of the tube body 120. The lid 110 and the tube body 120 are connected by screwing.

In this example, the lid 110 has a cylindrical shape.

It is preferable that the material of the lid 110 is a plastic resin (such as polypropylene, polyethylene and polycarbonate) having a chemical resistance property. A blended material selected from those materials can be employed as a material. In this example, the material is polypropylene. Polypropylene is an appropriate material as the membrane of the sample storage tube which has chemical stability and has chemical resistance.

Next, the tube body 120 is described.

The tube body 120 is a container for storing a sample. A container comprises an information writable area in the bottom can be employed as the tube body 120. Other element is not limited.

The configuration of the tube body 120 comprises an inner cylinder body 121, an externally equipped element 122, a bottom 123, an information non-writable area 124, an information writable area 125 and a gasket 126.

Regarding the height of the tube body 120, if the tube body 120 is held in the rack, it is preferable that height of the tube body 120 is higher than that of the grid plate of the rack. The sample storage tube 100 is inserted to and picked up from the rack repeatedly. If the upper portion of the tube body 120 is projecting from the rack top surface in the stored state in rack, the sample storage tube body is easy to access with the robot arm.

The inner cylinder body 121 is a test tube shape container for storing sample.

The inner cylinder body 121 is formed by a light transmissive material to allow observing of the inner space.

It is preferable that the material of the lid 121 is a glass or a plastic resin having a transparent characteristic or translucent characteristic to observe the inner space. It is preferable that the material has the high chemical resistance property (such as polypropylene, polyethylene and polycarbonate). The blended material selected from those materials can be employed as a material. In this example, the transmissive material is polypropylene. Polypropylene is an appropriate material as the membrane of the sample storage tube which has chemical stability, chemical resistance property and high transparency.

An externally equipped element 122 is equipped outside to the inner cylinder body 121 throughout from the bottom surface to the side surface. The externally equipped element 122 is formed by the black color plastic resin in which a coloring agent is included to turn its color from black to white by heat generated by laser beam, which is used as a medium in which printed information codes can be written directly. In this example, the externally equipped element 122 has a cylindrical shape, but other element can be added depending on the use. For example, it may comprise a rotation preventing object at the side wall surface or the bottom surface of the cylindrical body that contacts the structure of the rack to block the rotation. For example, a plurality of wing shape protrusions are installed at the bottom of the cylindrical body of the externally equipped element 122 in a radial pattern. If a plurality of wing shape protrusions are also installed to the rack, the wing shape protrusions engage each other to prevent the externally equipped element 122 from rotating even though a rotation torque is applied to the tube body 120. If the rotation of the tube body 120 can be blocked, the tube body 120 does not rotate even though the rotation torque is transmitted via the lid 110 by the automation robot arm. The capping operation and the decapping operation can be operated precisely.

Next, the bottom 123 is described.

Fig.2 is an enlarged schematic view showing the enlarged image of the bottom 123. The bottom 123 is an element to seal the bottom of the externally equipped element 122, in this example, its shape is a circular plate as shown in Fig.1.

The bottom 123 includes the information non-writable area 124 in the center portion and the information writable area 125 surrounding the information non-writable area 124.

The information non-writable area 124 is an area where the printed information codes 130 are not written. The information non-writable area 124 is used as the area for embedding the wireless IC chip 140. The information non-writable area 124 is formed by a transparent material, and the embedded wireless IC chip 140 can be seen through it. Not according to the invention, if it is not necessary for the wireless IC chip 140 to be seen by an operator, the whole bottom 123 can be formed by the black color material.

The information writable area 125 is located outside of the information non-writable area 124. The information writable area 125 is formed by the black color plastic resin in which a coloring agent is included to turn its color from black to white by heat generated by laser beam. In this example, plural printed information codes 130 are written dispersedly in the information writable area 125.

The printed information code 130 is a printed figure carrying the encoded information such as two-dimensional dot codes. In this configuration, the data amount of the encoded information carried by a printed information code 130 is smaller than that of the information to be applied to a sample storage tube 100, so that plural encoded information carried by plural printed information codes 130 are combined and calculated to obtain a larger information by using a predetermined algorithm processing. For example, the data amount of the information to be applied to one sample storage tube 100 is 16 bits and the requested size for carrying the 16 bits data amount by a single figure is "R", and the size of the printed information codes 130 of the present invention is "r", which is smaller than "R". Therefore, the data amount of the printed information code 130 of the present invention is less than 16 bits, for example, 8 bits. The size of the printed information codes 130 of the present invention becomes compact size according to its carriable data amount. The size "r" is smaller than "R". The "small size printed information code" does not mean a merely small fragment obtained by cutting the large size two-dimensional code into small pieces physically. Each printed information codes 130 of the present invention is an independent two-dimensional code even if it is small. It is an independent two-dimensional code which can be decoded independently even though the carriable encoded information is small. A single printed information codes 130 of the present invention cannot provide the whole information to be applied to the sample storage tube but a combination of a group of the printed information codes 130 of the present invention can provide the whole information to be applied to the sample storage tube by calculating based on each decoded information carried by each printed information code 130 of the present invention according to the predetermined algorithm processing.

For example, information to be applied to the sample storage tube is 16 bits, and it is separated into a set of 8 bits of data. Each 8 bits of data can be encoded to a small size two-dimensional code which can carry 8 bits. These small size two-dimensional codes correspond to the printed information code 130 of the present invention. If there are only two decoded information decoded from two small size two-dimensional codes, it is not sure which 8bits are upper portion data and which 8 bits are lower portion data. It is not possible to obtain precise data by merging two decoded information. Therefore, information describing how to re-build 16 bits data from two pieces of 8 bits data is needed. There are many logics for dividing 16 bits data into two pieces of 8 bits of data and re-building 16 bits data from two pieces of 8 bits data. This invention is not limited to a specific logic. This invention provides technical idea for carrying the large information data to be applied to a sample storage tube by the smaller size two-dimensional code.

The printed information code 130 is printed in the information writable area 125 radially from the center of the bottom 123. In this example, 4 pieces of the printed information codes 130 are printed, which are provided 90° apart from each other on the circumference around a center portion as shown in Fig.2 (a).

Fig.2 (b) is a schematic view showing the size of the printed information code 130 of this first pattern. The printed information code 130 of this first pattern employs a two-dimensional code encoded by general specification. In this example, the DataMatrix code system is employed as the two-dimensional code encoded by general specification.

In this example, the information to be applied to a sample storage tube 100 comprises 12 characters.

The left of the Fig.2 (b) describes the procedure for processing 4 sets of decoded information obtained from two-dimensional code 130-1 to 130-4, calculated with a predetermined algorithm. For example, if the size of each two-dimensional code 130-1 to 130-4 is 10 cells x 10 cells, the carriable data amount corresponds to 6 characters. If the width per one cell is 0.16 mm, the size of the printed information code becomes 1.6 cm x 1.6 cm = 2.56 cm². The information to be applied to the sample storage tube 100 is calculated from these 4 pieces of 6 characters with the predetermined algorithm.

Each printed information code 130-1 to 130-4 can carry data corresponding to 6 characters, so the 12 characters information to be applied to the sample storage tube 100 can be divided into 6 characters and be assigned to the printed information codes. For example, the former 6 characters is assigned to the printed information code 130-1, the latter 6 characters is assigned to the printed information code 130-2.

In this case, the printed information codes 130-3 and 130-4 provide information for identifying the correct combination of 4 pieces of printed information codes among a lot of the printed information codes in the captured image and determining which ones are the printed information code 130-1 and 130-2.

For example, the printed information code 130-3 carries the information showing which printed information code is the printed information code 130-1 and which printed information code is the printed information code 130-2. For example, if there is a rule that the some printed information code as 130-1 is assigned to the printed information code 130-3, it is easy to determine the printed information code 130-1 by finding two of the same printed codes among 4 pieces. One of the remaining 2 pieces of the printed information code is the printed information code 130-2, and the other is the check code. The equal symbol shown in Fig.2 (b), left 4 pieces of the printed information codes describes the former 6 characters and the latter 6 characters and equals to 12 characters.

The size of DataMatrix that can carry all 12 characters in one printed information code becomes 14 cells x 14 cells. If the width per one cell is 0.16 cm, the size of DataMatrix is 2.24 cm x 2.24 cm = 5.02 cm². This size of DataMatrix can carry 12 characters data in one code. The size of the printed information code shown in Fig.2 (b) is 2.56 cm², so the double size code should be required for carrying 12 characters data in one code.

The printed information code 130-4 is check code. For example, the printed information code 130-4 carries specific code information with which the calculating result of 4 pieces of the printed information code 130-1 to 130-4 becomes 0. By putting this check code into a combination of 4 pieces of the printed information codes, the correct group comprising 4 pieces of the printed information codes can be selected among a lot of printed information codes in the captured image.

The sample storage tube 100 is arrayed in a rack. For example, the rack space is partitioned by grid and the hole is opened onto the bottom, and the sample storage tube is housed by locking to the edge near the bottom of the grid. Therefore, a lot of printed information codes 130 are captured adjacent to each other in the captured image.

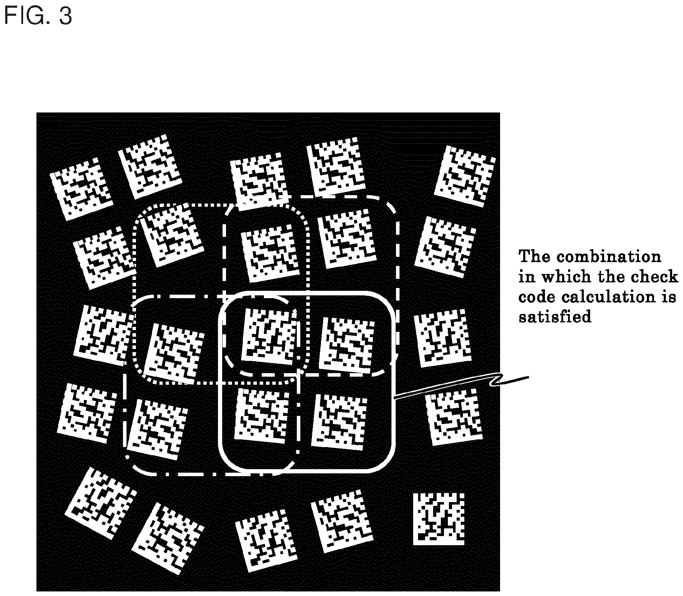

Fig. 3 is a schematic view showing the captured image captured from the lower direction to the bottom of the sample storage tube 100 which plural sample storage tubes 100 arrayed in a rack.

In this example shown in Fig.3, all sample storage tubes 100 are arranged equally in the same direction in a rack. However, the outer shape of the externally equipped element 122 in the horizontal direction is a circle shape, so that the sample storage tube 100 can take various angles around the vertical axis. However, the principle of how to identify the correct combination of the printed information codes 130 can be applied regardless of this condition.

As shown in Fig.3, an image is captured from the lower direction to the bottom of the rack by camera, and a lot of images of the printed information codes 130 can be seen in the captured image. At a glance, it is not known which combination of the printed information codes is correct for corresponding to a single sample storage tube 100. In the present invention, it is possible to check the combination by picking up 4 pieces of printed information codes adjacent to each other arbitrarily, and calculating the check code result becoming a specific value such as 0.

The example shown in Fig.3 describes how to search the possible combination be focusing on the center printed information code 130 and picking up the remaining 3 printed information codes 130 adjacent to the selected center one. There are 4 candidates, including the combination surrounded by dotted lines, the combination surrounded by broken lines, the combination surrounded by dot-dash lines, and the combination surrounded by solid lines. The correct combination among those can be identified by calculating check code satisfaction. For example, the combination surrounded by dot lines, the combination surrounded by broken lines and the combination surrounded by dot-dash lines do not satisfy the check code calculation, but only the combination surrounded by solid lines satisfies the check code calculation. In this result, the combination surrounded by solid lines can be identified as the correct combination of 4 pieces of the printed information codes written in one bottom 123 for carrying information to be applied to the sample storage tube 100.

Once a correct combination is identified among a lot of printed information codes in the captured image by calculating check code, other combinations consisting of 4 pieces of the printed information code adjacent to each other are identified one after another by calculating the check code, and all correct combinations can be identified.

Next, the wireless IC chip 140 is described.

The wireless IC chip 140 is embedded in or stuck onto the information non-writable area 124 in the center portion of the sample storage tube 100. For example, a RFID type wireless IC chip encoded by general specification can be employed. Because of the wireless IC chip 140, the data can be input and output by the contactless means.

In this configuration, the wireless IC chip 140 is installed in the information non-writable area 124, no printed information code 130 is written by overlapping state by laser beam. Therefore, heat generated by the laser beam does not influence the wireless IC chip, and there is no heat damage to the wireless IC chip 140.

The color of the information non-writable area 124 is not limited. It is transparent in this example. Therefore, the wireless IC chip 140 can be seen from the lower direction to the bottom surface 123 through the information non-writable area 124 even if the wireless IC chip 140 is embedded into it.

According to the sample storage tube 100 of this embodiment 1 of this invention, both the printed information codes 130 and the wireless IC chip 140 can be installed to the bottom of the tube body without interference between the arrangement of the printed information codes 130 and the arrangement of the wireless IC chip 140. Therefore, the access means for accessing the information carried by the sample storage tube varies by means of reading the printed information codes in the captured image and by means of the wireless communication with the wireless IC chip.

Accordingly, the automatic operating system for a sample storage tube can obtain the necessary information carried by the sample storage tube arranged in a rack by capturing the image from lower direction to the bottom surface, grouping the correct combination of the printed information codes, decoding the encoded information from the printed information codes and calculating the information to be applied to the sample storage. In addition, information carried by the sample storage tube can be obtained by the wireless communication with the wireless IC chip.

### Embodiment 2

The second pattern of the sample storage tube in embodiment 2 according to the present invention is described. The sample storage tube in embodiment 2 employs the wireless IC chip embedded in the information non-writable area.

The second pattern is that the bottom shape of the micro tube is a polygon (for example, square) and the printed information code is two-dimension code encoded by general specification.

In this second pattern, plural general two-dimension codes are printed in the information writable area arranged in each corner of the bottom.

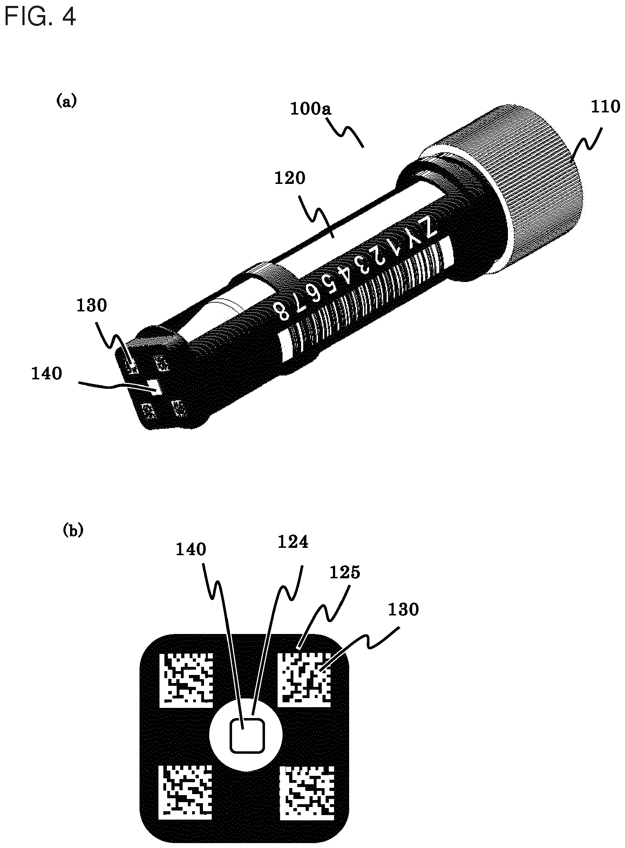

Fig.4 is a schematic view of the structure of the sample storage tube 100a of the second pattern.

This example employs an outer screw type, but an inner screw type can be employed instead. Fig.4 mainly shows the bottom of the sample storage tube 100a because the bottom structure is important.

Fig.4 (a) is a perspective view emphasizing the bottom structure.

Fig.4 (b) is an enlarged schematic view showing the enlarged image of the information non-writable area 124, information writable area 125, the printed information codes 130 and the wireless IC chip 140 of this second pattern.

Hereinafter, the element which is different from that shown in embodiment 1 is mainly described. The element which is the same as shown in embodiment 1 is omitted appropriately. The material and the function are the same as embodiment 1, but the shapes of some parts are different from embodiment 1.

The sample storage tube 100a of this second pattern comprises a lid 110, a tube body 120, a printed information code 130 and a wireless IC chip 140 the same as embodiment 1, but the bottom shape is square.

There are an information non-writable area 124 secured in the center portion of the bottom 123 and an information writable area 125 arranged around the information non-writable area 124. The printed information codes are written in each corner of the square shape of the bottom. The information writable areas 125 are made of black base plastic resin including coloring agent that can turn its color from black to white by laser irradiation, the same as embodiment 1.

The information non-writable area 124 of this embodiment 2 is secured in the center portion of the bottom. Its function is the same as that of embodiment 1.

The function of the information writable area 125 is also the same as embodiment 1 even though the shape is different.

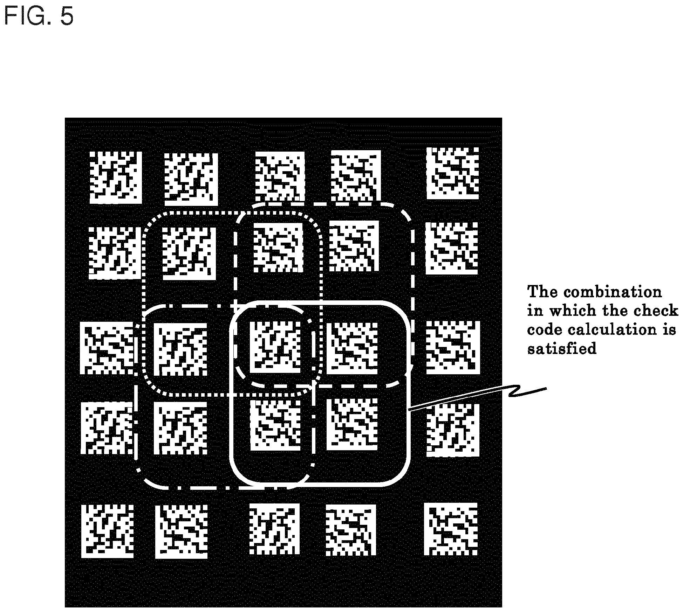

Fig. 5 is a schematic view showing the captured image captured from the lower direction to the bottom of the sample storage tube wherein plural sample storage tubes arrayed in a rack. In this example shown in Fig.5, all sample storage tubes 100 are arranged equally in the same direction in a rack. However, the outer shape of the externally equipped element 122 in the horizontal direction is a square shape, so that the sample storage tubes 100 can take various rotation angles in increments of 90 degrees with respect to the central axis. However, the principle of how to identify the correct combination of the printed information codes 130 can be applied regardless of this condition. In this example, there are 4 pieces of the printed information codes 130 per one sample storage tube 100. One of four is a check code, so that the correct combination can be identified by calculating with the check code.

As shown in Fig.5, an image is captured from the lower direction to the bottom of the rack by camera, and a lot of images of the printed information codes 130 can be seen in the captured image. At a glance, it is not known that which combination of the printed information codes is correct corresponding to one sample storage tube 100. In the present invention, it is possible to check the combination by picking up 4 pieces of printed information codes adjacent to each other arbitrarily, and calculating the check code result becoming a specific value such as 0.

In the example shown in Fig.5, the combination surrounded by dotted lines, the combination surrounded by broken lines and the combination surrounded by dot-dash lines do not satisfy the check code calculation, but only the combination surrounded by solid lines satisfies the check code calculation. According to this result, the combination surrounded by solid lines can be identified as the correct combination of 4 pieces of the printed information codes written in one bottom 123 for carrying information to be applied to the sample storage tube 100.

Once a correct combination is identified among a lot of printed information codes in the captured image by calculating check code, other combinations consisting of 4 pieces of the printed information code adjacent to each other are identified one after another by calculating the check code, and all correct combinations can be identified.

The information can be obtained by reading the printed information code 130 and by communicating with the wireless IC chip 140.

As shown above, the principal of the present invention can apply regardless of the bottom shape of the sample storage tube such as circle and polygon, or the type of the printed information code such as bar code and two-dimensional code.

Various designs for the bottom shape of the tube body are shown below.

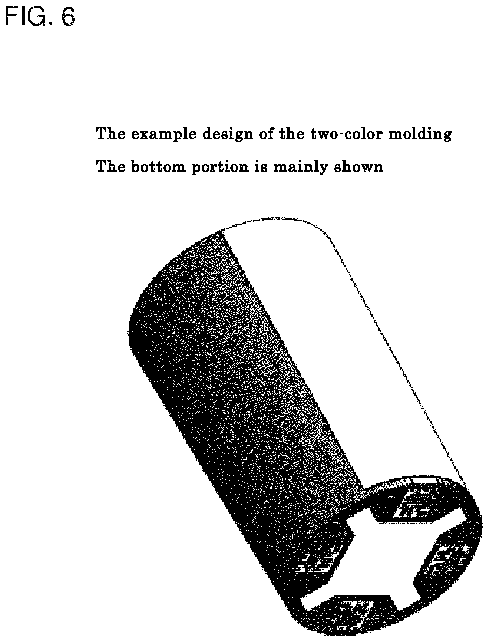

Fig. 6 is a bottom view of the bottom 123 of the tube body 120 formed by the two-color injection molding.

In this example, the tube body 120 is formed by molding a transparent inner cylinder tube onto an inner side of an externally equipped element whose shape is a half cylinder shape by two-color molding method. The bottom of the black color externally equipped element provides the information writable area 125 formed on each of 4 corners defined as a part of the bottom. The inner cylinder tube can be observed directly through the opening in the center portion. This center portion is an information non-writable area 124 and a wireless IC chip is embedded in there.

There are various types of designs for the tube body formed by two-color molding method. The present invention is not limited to the specified design. A tube body can be supplied by a two color molding method so that an information writable area 125 is formed as a part of the bottom 123 of the tube body 120 by the one material including coloring agent and an information non-writable area 124 is formed as a remaining part of the bottom 123 of the tube body 120 by the other material.

### Embodiment 3 (not according to the invention)

Embodiment 3 describes the configuration of a sample storage tube in which a wireless IC chip is not installed in the information non-writable area, and the inside of the inner cylindrical tube is observed through the center portion.

There are various combinations of the bottom shape, the shape of the information writable area and the types of the printed information code for the tube body that does not have any wireless IC chip. For example, the configuration shown in Embodiment 1 from which the wireless IC chip is eliminated and the configuration shown in Embodiment 2 from which the wireless IC chip is eliminated can be counted as the example of this Embodiment 3. As an example, the configuration with the bottom shape that is circular and the printed information code is two-dimensional dot code encoded by general specification can be used.

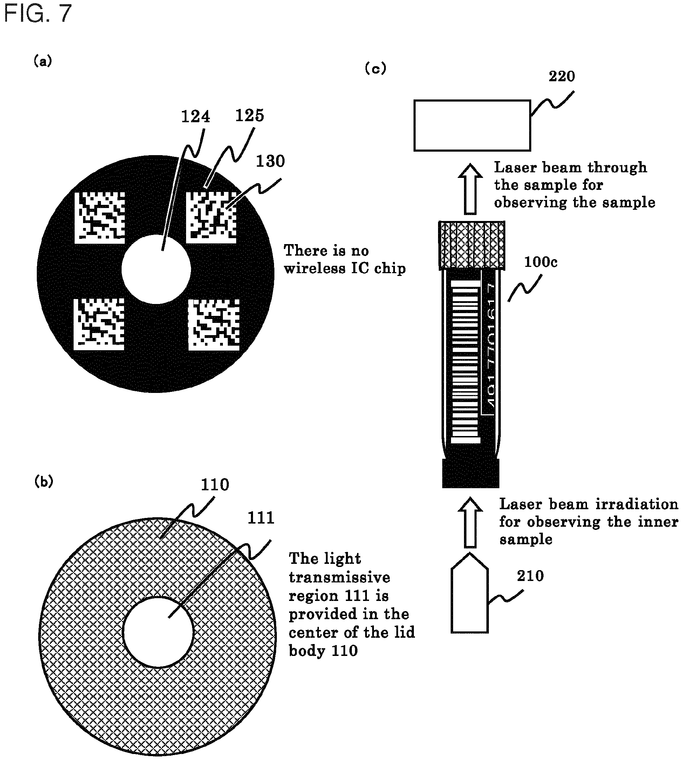

Fig.7 is a schematic view of the structure of the sample storage tube 100c of the Embodiment 3.

Fig.7 (a) is the bottom view.

Fig.7 (b) is the plan view.

Fig.7 (c) is the side view showing sample storage tube 100c with a light irradiation apparatus 210 and a photo detection apparatus 220 as an outer apparatus. Fig.7 (c) shows its scale smaller than Fig.7 (a) and Fig.7 (b).

Hereinafter, a part different from that of Embodiment 1 is mainly described, and a part the same as that of Embodiment 1 is omitted. The material, the function, and the like are the same, and the shape of the member is different.

The same as Embodiment 1, the sample storage tube 100c includes a lid body 110, a tube body 120, and a printed information code 130. In this configuration example, a wireless IC chip 140 is not provided.

An information non-writable area 124 is provided at the center of a bottom surface 123 and an information writable area 125 is provided around the information non-writable area 124. The information writable area 125 is formed by a plastic resin material in which a coloring agent is included and it can turn its color by laser beam irradiation the same as shown in Embodiment 1.

The information non-writable area 124 of the third embodiment has the same shape as that of the information non-writable area 124 of the first embodiment but no wireless IC chip 140 is embedded in there. An information non-writable area 124 is formed by the same light transmissive material as shown in the first embodiment. The state of the internal sample can be observed through the information non-writable area 124 of the bottom 123 because there is no wireless IC chip embedded in there.

As shown in Fig.7 (b), a part of a lid body 110 of a sample storage tube 100c is a light transmissive region 111. The position of the light transmissive region 111 corresponds to an information non-writable area 124 at the center of the bottom surface 123. With this construction, the light can pass through in the vertical direction from the light transmissive region 111 of the lid body 110 to the information non-writable area of the bottom surface 123, so that the state of the inside of the sample tube can be observed.

As shown in Fig.7 (c), a light irradiation apparatus is provided on either the upper side of the lid body 110 or below the bottom surface 123 and a light detecting apparatus 220 is provided on the other side. In the configuration example shown in Fig.7 (c), a light irradiation apparatus is provided below a bottom surface 123 and a light detecting apparatus 220 is provided above the lid body 110.

The light emitted from the light irradiation apparatus 210 passes through the inside of the sample storage tube 100c and receives the light detecting apparatus 220 so that the state of the inside of the sample tube can be observed.

The information writable area 125 and the printed information code 130, and the reading processing are the same as those of embodiment 1, so the description thereof is omitted here.

While some preferable embodiments of the sample storage according to the present invention are described above, it should be understood that various changes are possible, without deviating from the technical scope according to the present invention.

### Industrial applicability

A sample storage tube according to the present invention can be employed as a sample storage tube such as a micro tube used extensively for storing a large number of samples.

### Description of the reference numerals

- 100: Sample storage tube
- 110: lid body
- 120: tube body
- 121: inner cylinder tube
- 122: externally equipped body
- 123: bottom
- 124: information non-writable area
- 125: information writable area
- 126: gasket
- 130: printed information code
- 140: wireless IC chip
- 210: light irradiation apparatus
- 220: light detecting apparatus

## Claims

1. A sample storage tube (100, 100a, 100c) comprising;
a tube body (120) configured to store a sample;
a lid (110) configured to cap an upper opening of the tube body (120);
an information printed area (125), on which information is printed, at a bottom surface (123) of the tube body (120); and
**characterized by**
an information non-printed area (124) formed by a light transmissive material wherein the information non-printed area (124) is secured in a center part of the bottom (123) of the tube body (120) and wherein a wireless IC chip (140) is embedded into or stuck onto the information non-printed area (124), wherein the information printed area (125) is arrayed in a peripheral portion of the bottom (123) of the tube body (120),
four pieces of printed codes (130-1, 130-2, 130-3, 130-4) printed in the information printed area (125), which are provided apart from each other on a circumference around a center portion, wherein each of the four pieces of printed codes (130-1, 130-2, 130-3, 130-4) is a two-dimension dot code;
wherein one of the printed codes (130-1, 130-2, 130-3, 130-4) is a printed check information code (130-4) that carries check information.

2. The sample storage tube (100, 100a, 100c) according to claim 1, in which two (130-1, 130-3) of the four printed codes (130-1, 130-2, 130-3, 130-4) are the same.

3. The sample storage tube (100, 100a, 100c) according to claim 1, wherein each of the four pieces of printed codes (130-1, 130-2, 130-3, 130-4) has a smaller size in bits than that of a single printed code which can carry the information given to the sample storage tube (100, 100a, 100c) independently.

4. The sample storage tube (100, 100a, 100c) according to claim 1 to 3, wherein
a group of the printed codes (130-1, 130-2, 130-3, 130-4) distributed in the information printed area (125) is recognizable by a combination of encoded information carried in the printed codes (130-1, 130-2, 130-3, 130-4) and the check information carried in the printed check information code (130-1, 130-2, 130-3, 130-4).

5. The sample storage tube (100, 100a, 100c) according to any one of claims 1 to 4, wherein the bottom shape of the sample storage tube body (120) is circular.

6. The sample storage tube (100, 100a, 100c) according to any one of claims 1 to 4, wherein the bottom shape of the sample storage tube body (120) is a polygonal shape.

7. The sample storage tube (100, 100a, 100c) according any one of claims 1 to 6, wherein a lid portion corresponding to the information non-printed area (124) of the bottom (123) of the tube body (120) has is formed by the light transmissive material, and
an inner sample state can be observed by light irradiated from a light irradiation apparatus (210) to a light detection apparatus (220), wherein the light irradiation apparatus (210) is provided on either the upper side of the lid body (120) or below the bottom surface (123) and the light detecting apparatus (220) is provided on the other side.

8. The sample storage tube (100, 100a, 100c) according to claim 7, wherein the information non-printed area (124) and the information printed area (125) are molded by a two-color molding apparatus,
at least the information non-printed area (124) is formed by the light transmissive material and the information printed area (125) is formed by a coloring material containing a color developer for printing the printed codes (130-1, 130-2, 130-3, 130-4) onto the information printed area (125).

9. The sample storage tube (100, 100a, 100c) according to claim 7, wherein the whole sample tube body (120) is molded with the light transmissive material by a molding apparatus,
at least the information printed area (125) is coated or printed with a coloring material containing a color developer for printing the printed codes (130-1, 130-2, 130-3, 130-4).

10. An automatic operating system configured to read and decode encoded information carried on the sample storage tube (100, 100a, 100c) according to claim 1, comprising;
an imaging part configured to take a picture image of the sample storage tube (100, 100a, 100c) from the bottom direction;
an image recognition part configured to read the printed codes (130-1, 130-2, 130-3, 130-4) included in the picture image obtained by the imaging part;
a grouping part configured to group the printed codes (130-1, 130-2, 130-3, 130-4) by using the printed check information code (130-4) that carries check information as a hint for searching the printed codes (130-1, 130-2, 130-3, 130-4) belonging to the same group obtained by the image recognition part;
a coded information calculating part configured to calculate the coded information given to the sample storage tube (100, 100a, 100c) by combining information carried in the plurality of the printed codes (130-1, 130-2, 130-3, 130-4) belonging to the same group grouped by grouping part;
and a wireless communication configured to read the information carried in the IC chip (140).

## Patentansprüche

1. Probenaufbewahrungsröhre (100, 100a, 100c), umfassend:
einen Röhrenkörper (120), der zur Aufbewahrung einer Probe geeignet ist;
einen Deckel (110), der geeignet ist, eine obere Öffnung des Röhrenkörpers (120) abzudecken;
einen Informationsdruckbereich (125) an einer Bodenfläche (123) des Röhrenkörpers (120), auf dem Information gedruckt ist; und
**gekennzeichnet durch**
einen nicht bedruckten Informationsbereich (124), der durch ein lichtdurchlässiges Material gebildet ist, wobei der nicht bedruckte Informationsbereich (124) in einem Mittelteil des Bodens (123) des Röhrenkörpers (120) befestigt ist, und wobei ein drahtloser integrierter Schaltkreis (140) in den nicht bedruckten Informationsbereich (124) eingebettet oder auf diesen geklebt ist, wobei der Informationsdruckbereich (125) in einem peripheren Abschnitt des Bodens (123) des Röhrenkörpers (120) angeordnet ist,
vier gedruckte Codes (130-1, 130-2, 130-3, 130-4), die in dem Informationsdruckbereich (125) gedruckt sind, die getrennt voneinander auf einem Umfang um einen Mittelabschnitt herum vorgesehen sind, wobei jeder der vier gedruckten Codes (130-1, 130-2, 130-3, 130-4) ein zweidimensionaler Punktcode ist;
wobei einer der gedruckten Codes (130-1, 130-2, 130-3, 130-4) ein gedruckter Prüfinformationscode (130-4) ist, der eine Prüfinformation trägt.

2. Probenaufbewahrungsröhre (100, 100a, 100c) nach Anspruch 1, in der zwei (130-1, 130-3) der vier gedruckten Codes (130-1, 130-2, 130-3, 130-4) gleich sind.

3. Probenaufbewahrungsröhre (100, 100a, 100c) nach Anspruch 1, wobei jeder der vier gedruckten Codes (130-1, 130-2, 130-3, 130-4) eine kleinere Bitgröße als die Größe eines einzelnen gedruckten Codes hat, der die der Probenaufbewahrungsröhre (100, 100a, 100c) gegebenen Information unabhängig tragen kann.

4. Probenaufbewahrungsröhre (100, 100a, 100c) nach einem der Ansprüche 1 bis 3, wobei
eine Gruppe der gedruckten Codes (130-1, 130-2, 130-3, 130-4), die in dem Informationsdruckbereich (125) verteilt sind, durch eine Kombination von codierter Information, die in den gedruckten Codes (130-1, 130-2, 130-3, 130-4) enthalten ist, und der Prüfinformation, die in dem gedruckten Prüfinformationscode (130-1, 130-2, 130-3, 130-4) enthalten ist, erkennbar ist.

5. Probenaufbewahrungsröhre (100, 100a, 100c) nach einem der Ansprüche 1 bis 4, wobei die Bodenform des Probenaufbewahrungsröhrenkörpers (120) kreisförmig ist.

6. Probenaufbewahrungsröhre (100, 100a, 100c) nach einem der Ansprüche 1 bis 4, wobei die Bodenform des Probenaufbewahrungsröhrenkörpers (120) eine polygonale Form hat.

7. Probenaufbewahrungsröhre (100, 100a, 100c) nach einem der Ansprüche 1 bis 6, wobei ein Deckelabschnitt, der dem nicht bedruckten Informationsbereich (124) des Bodens (123) des Röhrenkörpers (120) entspricht, durch das lichtdurchlässige Material gebildet ist, und
ein innerer Probenzustand durch Licht beobachtet werden kann, das von einer Lichtbestrahlungsvorrichtung (210) auf eine Lichterfassungsvorrichtung (220) gestrahlt wird, wobei die Lichtbestrahlungsvorrichtung (210) entweder auf der Oberseite des Deckelkörpers (120) oder unterhalb der Bodenfläche (123) vorgesehen ist und die Lichterfassungsvorrichtung (220) auf der anderen Seite vorgesehen ist.

8. Probenaufbewahrungsröhre (100, 100a, 100c) nach Anspruch 7, wobei der nicht bedruckte Informationsbereich (124) und der Informationsdruckbereich (125) durch eine Zweifarbengießvorrichtung gegossen werden,
zumindest der nicht bedruckte Informationsbereich (124) durch das lichtdurchlässige Material gebildet ist und der Informationsdruckbereich (125) durch ein Farbmaterial gebildet ist, das einen Farbentwickler zum Drucken der gedruckten Codes (130-1, 130-2, 130-3, 130-4) auf den Informationsdruckbereich (125) enthält.

9. Probenaufbewahrungsröhre (100, 100a, 100c) nach Anspruch 7, wobei der gesamte Probenröhrenkörper (120) mit dem lichtdurchlässigen Material durch eine Gießvorrichtung gegossen ist,
zumindest der Informationsdruckbereich (125) mit einem Farbmaterial beschichtet oder bedruckt ist, das einen Farbentwickler zum Drucken der gedruckten Codes (130-1, 130-2, 130-3, 130-4) enthält.

10. Automatisches Betriebssystem, das geeignet ist, codierte Information, die sich auf der Probenaufbewahrungsröhre (100, 100a, 100c) gemäß Anspruch 1 befindet, zu lesen und zu dekodieren, umfassend:
einen Abbildungsteil, der geeignet ist, ein Bild der Probenaufbewahrungsröhre (100, 100a, 100c) von unten aufzunehmen;
einen Bilderkennungsteil, der geeignet ist, die gedruckten Codes (130-1, 130-2, 130-3, 130-4), die in dem durch den Abbildungsteil erhaltenen Bild enthalten sind, zu lesen;
einen Gruppierungsteil, der geeignet ist, die gedruckten Codes (130-1, 130-2, 130-3, 130-4) unter Verwendung des gedruckten Prüfinformationscodes (130-4), der Prüfinformation als einen Hinweis zum Suchen der gedruckten Codes (130-1, 130-2, 130-3, 130-4), die zu derselben durch den Bilderkennungsteil erhaltenen Gruppe gehören, trägt, zu gruppieren;
einen Berechnungsteil für kodierte Information, der geeignet ist, durch Kombinieren von Information, die in den mehreren gedruckten Codes (130-1, 130-2, 130-3, 130-4) enthalten ist, die zu der gleichen durch den Gruppierungsteil gruppierten Gruppe gehören, die kodierte Information zu berechnen, die der Probenaufbewahrungsröhre (100, 100a, 100c) gegeben ist; und
eine drahtlose Kommunikation, die geeignet ist, die im integrierten Schaltkreis enthaltene Information zu lesen (140).

## Revendications

1. Tube de stockage d'échantillon (100, 100a, 100c) comprenant :
un corps du tube (120) configuré pour stocker un échantillon ;
un couvercle (110) configuré pour boucher une ouverture supérieure du corps du tube (120) ;
une zone d'impression d'information (125) sur une surface inférieure (123) du corps du tube (120), sur laquelle une information est imprimée ; et **caractérisé par**
une zone d'information non imprimée (124) formée par un matériau transmettant la lumière, dans lequel la zone d'information non imprimée (124) est fixée dans une partie centrale du fond (123) du corps du tube (120) et dans lequel une puce de circuit intégré sans fil (140) est intégrée ou collée dans la zone d'information non imprimée (124), dans lequel la zone d'impression d'information (125) est disposée dans une partie périphérique du fond (123) du corps du tube (120),
quatre morceaux de codes imprimés (130-1, 130-2, 130-3, 130-4) imprimés dans la zone d'impression d'information (125), qui sont prévus à distance les uns des autres sur une circonférence autour d'une partie centrale, dans lequel chacun des quatre morceaux de codes imprimés (130-1, 130-2, 130-3, 130-4) est un code à points bidimensionnel ;
dans lequel l'un des codes imprimés (130-1, 130-2, 130-3, 130-4) est un code d'information de vérification imprimé (130-4) qui porte une information de vérification.

2. Tube de stockage d'échantillon (100, 100a, 100c) selon la revendication 1, dans lequel deux (130-1, 130-3) des quatre codes imprimés (130-1, 130-2, 130-3, 130-4) sont identiques.

3. Tube de stockage d'échantillon (100, 100a, 100c) selon la revendication 1, dans lequel chacun des quatre morceaux de codes imprimés (130-1, 130-2, 130-3, 130-4) a une taille plus petite en bits que celle d'un seul code imprimé qui peut porter l'information donnée au tube de stockage d'échantillons (100, 100a, 100c) indépendamment.

4. Tube de stockage d'échantillon (100, 100a, 100c) selon l'une des revendications 1 à 3, dans lequel
un groupe de codes imprimés (130-1, 130-2, 130-3, 130-4) distribués dans la zone d'impression d'information (125) est reconnaissable par une combinaison des informations codées portées dans les codes imprimés (130-1, 130-2, 130-3, 130-4) et de l'information de vérification portée dans le code d'information de vérification imprimé (130-1, 130-2, 130-3, 130-4).

5. Tube de stockage d'échantillon (100, 100a, 100c) selon l'une des revendications 1 à 4, dans lequel la forme du fond du corps du tube de stockage d'échantillon (120) est circulaire.

6. Tube de stockage d'échantillon (100, 100a, 100c) selon l'une des revendications 1 à 4, dans lequel la forme du fond du corps du tube de stockage d'échantillon (120) est une forme polygonale.

7. Tube de stockage d'échantillon (100, 100a, 100c) selon l'une des revendications 1 à 6, dans lequel une partie de couvercle correspondant à la zone d'information non imprimée (124) du fond (123) du corps du tube (120) est formée par le matériau transmettant la lumière, et
un état de l'échantillon interne peut être observé par la lumière irradiée d'un appareil d'irradiation de lumière (210) vers un appareil de détection de lumière (220), dans lequel l'appareil d'irradiation de lumière (210) est prévu soit sur le côté supérieur du corps de couvercle (120) soit sous la surface inférieure (123) et l'appareil de détection de lumière (220) est prévu sur l'autre côté.

8. Tube de stockage d'échantillon (100, 100a, 100c) selon la revendication 7, dans lequel la zone d'information non imprimée (124) et la zone d'impression d'information (125) sont moulées par un appareil de moulage bicolore,
au moins la zone d'information non imprimée (124) est formée par le matériau transmettant la lumière et la zone d'impression d'information (125) est formée par un matériau colorant contenant un révélateur de couleur pour imprimer les codes imprimés (130-1, 130-2, 130-3, 130-4) sur la zone d'impression d'information (125).

9. Tube de stockage d'échantillon (100, 100a, 100c) selon la revendication 7, dans lequel le corps entier du tube d'échantillon (120) est moulé avec le matériau transmettant la lumière par un appareil de moulage,
au moins la zone d'impression d'information (125) est recouverte ou imprimée avec un matériau colorant contenant un révélateur de couleur pour l'impression des codes imprimés (130-1, 130-2, 130-3, 130-4).

10. Système d'exploitation automatique configuré pour lire et décoder l'information codée portée sur le tube de stockage d'échantillon (100, 100a, 100c) selon la revendication 1, comprenant ;
une partie d'imagerie configurée pour prendre une image du tube de stockage d'échantillon (100, 100a, 100c) depuis la direction du fond ;
une partie de reconnaissance d'image configurée pour lire les codes imprimés (130-1, 130-2, 130-3, 130-4) inclus dans l'image obtenue par la partie d'imagerie ;
une partie de regroupement configurée pour regrouper les codes imprimés (130-1, 130-2, 130-3, 130-4) en utilisant le code d'information de contrôle imprimé (130-4) qui porte l'information de contrôle comme indice pour rechercher les codes imprimés (130-1, 130-2, 130-3, 130-4) appartenant au même groupe obtenu par la partie de reconnaissance d'image ;
une partie de calcul d'information codée configurée pour calculer l'information codée donnée au tube de stockage d'échantillon (100, 100a, 100c) en combinant les informations portées dans la pluralité des codes imprimés (130-1, 130-2, 130-3, 130-4) appartenant au même groupe regroupés par la partie de regroupement ; et
une communication sans fil configurée pour lire les informations portées par la puce à circuit intégré (140).
